# FASCICULE DE BREVET EUROPEEN

(11) **EP 2 404 511 B1**
(45) Date de publication et mention de la délivrance du brevet: **16.01.2013**
(21) Numéro de dépôt: 10305749.3
(22) Date de dépôt: 06.07.2010
(51) Int. Cl.: A23N 15/00, A23N 15/04, A01D 23/04

(54) **Dispositif et procédé de découpe du trognon de salades**
Vorrichtung und Verfahren zum Abschneiden des Strunks von Salatköpfen
Device and method for cutting the core from lettuces

(43) Date de publication de la demande: 11.01.2012
(73) Titulaire: Mécanique et Chaudronnerie de l'Atlantique, 29000 Quimper (FR)
(72) Inventeur: Le Pape, Philippe, 29940 La Fôret Fouesnant (FR)
(74) Mandataire: Regimbeau

(56) Documents cités:
- EP-A1- 1 759 600
- WO-A1-2005/068297
- DE-A1- 19 802 271
- US-A1- 2007 095 041

## Description

L'invention concerne un dispositif de découpe du trognon de salades.

L'invention s'applique à différents types de salades, telles que par exemple les laitues, les scaroles, les batavias, les salades du type « iceberg ».

Différents types de dispositifs de découpe de salades sont connus dans l'état de la technique.

Le document DE-A-198 02 271 décrit un dispositif d'épluchage d'une laitue tenue par le trognon, dans lequel on coupe d'abord les feuilles extérieures qui ne sont pas consommées, où un couteau est déplacé par des moteurs contre la salade en une position déterminée par un capteur d'images et un calculateur, le capteur permettant de détecter la silhouette de la laitue. Puis les feuilles intérieures de la laitue sont coupées par un couteau sans couper le trognon. La position maximale de pénétration du couteau dans la laitue est déterminée par une fonction empirique. Cette position de pénétration du couteau est déterminée à partir du diamètre visible du trognon et de la taille de la tête de laitue par une fonction déterminée empiriquement. Le traitement d'image permet de mesurer la longueur et le diamètre du trognon. Puis, le trognon est évacué en une station.

Le document EP-B-1 327 393 décrit une installation où l'on coupe la calotte de la salade retenue par son trognon sur des griffes, où une rotation relative entre la calotte et le couteau est effectuée.

Le document EP-A-1 550 379 décrit une installation d'étrognage de têtes de salade, dans lequel un support embroche la salade puis la soulève contre un élément de transfert ayant des crochets se plantant dans le trognon de la salade. Puis, le poste d'étrognage enfonce un couteau de manière inclinée dans la salade puis fait tourner la salade par rapport au couteau pour découper le trognon de manière conique. Le couteau est commandé en fonction de la position de l'élément de transfert chargé de la salade. Au préalable, un générateur forme un faisceau lumineux définissant une ligne de repère lumineuse visible pour aider un opérateur à installer la salade sur le support, de manière à aligner le trognon sur la ligne de repère lumineuse.

Le document FR-A-2 694 165 décrit une machine d'épluchage de salade, où chaque salade est suspendue à sa base par une pince d'un charriot, une couronne de feuilles extérieures est d'abord ôtée par des disques de coupe dans un premier poste, puis, des moyens de détection mécaniques ou optiques mesurent le diamètre de la salade afin de déterminer la position latérale des disques de coupe du poste de coupe suivant. Ces disques coupent l'extrémité des feuilles extérieures pour obtenir une salade dont le diamètre est déterminé par le moyen de détection puis d'autres coupes de la salade sont effectuées par les disques. La pince comporte des aiguilles pénétrant à l'intérieur du trognon. Un palpeur est prévu pour faire sortir les aiguilles.

Le document FR-A-2 611 444 décrit un dispositif de découpe d'une salade positionnée dans un support formé d'anneaux. Un palpeur 18 détecte la position du coeur de salade pour commander la position du dispositif de découpe sur un axe en fonction de la position du coeur de la salade.

Le document WO 2005/068297 décrit un dispositif d'emballage de laitue comportant une station de découpe pour enlever leur trognon. Un robot amène la laitue jusqu'à ce dispositif de coupe du type guillotine pour éliminer une zone du tronc de la laitue. Au préalable, un système de vision artificielle effectue une lecture d'une pesée de la laitue.

L'un des problèmes des dispositifs de découpe du trognon de salades est qu'ils doivent fonctionner en continu, de manière automatisée, à une cadence élevée de découpe, tout en enlevant de manière fiable le trognon, en maximisant le poids de la partie restant de la salade après découpe du trognon, cette partie étant la partie vendue de la salade comportant des feuilles consommables.

L'inconvénient des dispositifs connus est qu'ils sont adaptés à seulement un type et donc une seule dimension de salade.

Or, on souhaite que le dispositif puisse découper plusieurs types de salade, pouvant avoir des dimensions différentes.

En outre, il faut que la salade soit bien maintenue en place pendant la découpe.

L'invention vise à obtenir un dispositif de découpe du trognon de salade remplissant ces exigences.

A cet effet, l'invention a pour objet un dispositif de découpe du trognon de salades,
caractérisé en ce qu'il comporte au moins un convoyeur d'amenée en continu des salades avec leur trognon tourné vers le bas,
au moins un robot comportant au moins un bras mobile muni d'un système de serrage pour, dans une position de préhension de la salade, saisir la salade par son pourtour à distance du trognon en laissant libre son trognon,
au moins un couteau pour la découpe du trognon,
des moyens de commande automatisés étant prévus pour faire passer, lorsque le système de serrage se trouve dans la position de préhension de la salade, le bras du robot successivement par :
- une première position de prélèvement de la salade du convoyeur,
- une deuxième position, dans laquelle le trognon se trouve devant un système de détection, pour déterminer la position du trognon par rapport au bras,
- une troisième position de découpe, dans laquelle des moyens d'entrainement du couteau et du bras l'un par rapport à l'autre provoquent la découpe du trognon par le couteau pour séparer le trognon par rapport au pourtour de la salade en fonction au moins de la position du trognon ayant été déterminée.

Les revendications 2 à 13 ont pour objet des modes de réalisation du dispositif suivant l'invention.

L'invention a également pour objet un procédé de découpe du trognon de salades à l'aide du dispositif de découpe tel que décrit ci-dessus, dans lequel :
- on amène par le convoyeur en continu des salades avec leur trognon tourné vers le bas en un poste de découpe où se trouve le robot,
- on prélève par le système de serrage du robot une salade sur le convoyeur par le fait que le système de serrage saisit le pourtour de la salade à distance de son trognon dans la position de préhension,
- le robot ayant son système de serrage dans la position de préhension du pourtour de la salade amène le trognon de cette salade devant le système de détection pour déterminer la position du trognon par rapport au bras du robot dans la deuxième position,
- le robot ayant son système de serrage dans la position de préhension du pourtour de la salade amène cette salade contre le couteau pour découper le trognon.

L'invention sera mieux comprise à la lecture de la description qui va suivre, donnée uniquement à titre d'exemple non limitatif en référence aux dessins annexés, sur lesquels :
- les figures 1, 2, 3 et 4 représentent schématiquement en perspective le dispositif de découpe de salade suivant l'invention dans différentes positions successives,
- la figure 5 est une vue schématique de côté de l'endroit de la salade où a lieu la découpe par le dispositif suivant l'invention.
- la figure 6 est une vue schématique de dessous d'une salade.

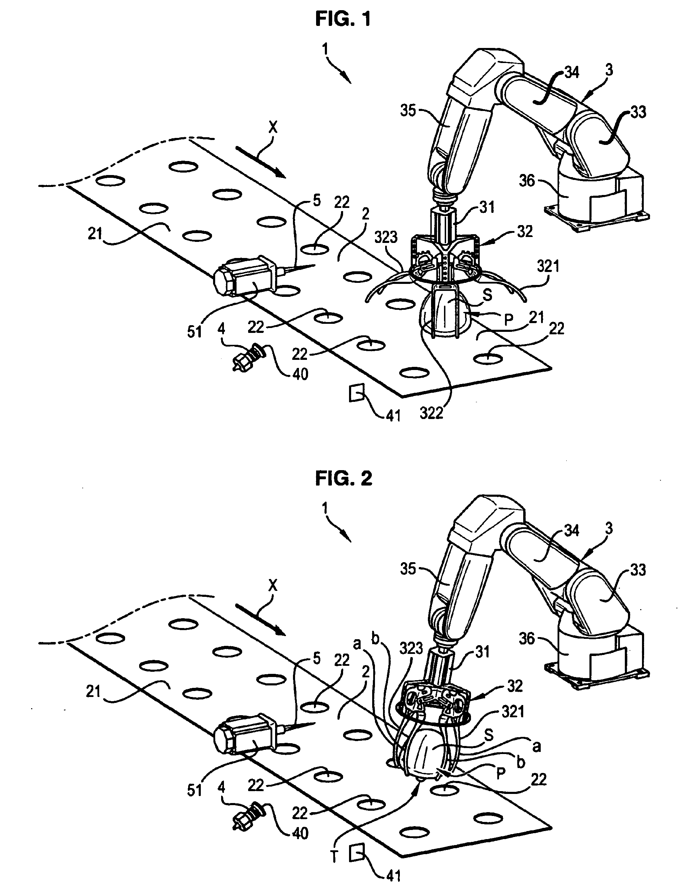

Aux figures 1 à 4, le dispositif 1 de découpe de salade suivant l'invention comporte un convoyeur 2 pour amener en continu des salades S auprès d'un robot 3 de préhension des salades. Les salades sont disposées avec leur trognon T tourné vers le bas sur le convoyeur 2. Le convoyeur 2 comporte un ou plusieurs trous 22 de réception des salades S en ayant leur trognon T en bas, sous le pourtour P de celles-ci.

Le convoyeur 2 comporte par exemple une bande 21 sans fin entraînée par des moyens d'entraînement appropriés en translation suivant un sens X d'amenée, par exemple horizontal, cette bande 21 étant munie du ou des trous 22 de réception des salades S. Aux figures, la salade S est symbolisée par une boule à peu près sphérique. Bien entendu, la salade S peut être de tout type, tel que ceux indiqués ci-dessus.

Les trous 22 de réception des salades sont disposés les uns derrière les autres sur la bande 21 selon la direction X d'amenée. La bande 21 comporte par exemple une ou plusieurs (par exemple deux aux figures) séries de trous 22 alignés dans le sens X d'amenée. Chaque salade S est disposée dans un trou 22 en ayant son trognon T tourné vers le bas, ce trognon T se trouvant sensiblement au niveau ou sous la bande 21.

Le robot 3 comporte un bras mobile 31 muni d'un système 32 de serrage du pourtour P de la salade S à distance du trognon T. Le robot 3 comporte par exemple plusieurs membres 33, 34, 35, articulés successivement en rotation l'un à l'autre, avec le bras 33 articulé en rotation sur une embase fixe 36 et le bras 35 articulé suivant deux axes de rotation perpendiculaires par rapport au bras 31 d'extrémité.

Le système 32 de serrage est par exemple du type à pinces pour exercer un serrage concentrique, c'est-à-dire centripète, sur le pourtour P de la salade S. A la figure 1, le système 32 de serrage se trouve dans une position d'ouverture au-dessus de la salade S et au-dessus du convoyeur 2. Dans cette position d'ouverture de la figure 1, les pinces 321, 322 et 323 sont écartées de la salade S. Le robot 3 amène le système 32 de serrage dans cette position d'ouverture au-dessus de la salade S se trouvant sur le convoyeur 2 lorsque le convoyeur 2 se trouve dans une position prescrite de passage au poste de découpe où se trouve le robot 3, le robot 3 connaissant par exemple les coordonnées du trou 22 se trouvant dans cette position de passage. Un détecteur du passage d'un trou 22 en cette position prescrite fixée à l'avance est par exemple prévu, pour déclencher les moyens de commande du robot, qui va alors exécuter son programme dans les première, deuxième et troisième positions.

Puis, à la figure 2, le robot 3 est commandé pour faire passer le système 32 de serrage dans une position de préhension de la salade dans laquelle le pourtour P de la salade S est saisi à distance du trognon T, en laissant libre ce trognon T. Dans le mode de réalisation de la figure 2, le passage de la position d'ouverture à la position de préhension est effectué par rapprochement des pinces 321, 322 et 323 l'une de l'autre autour du pourtour P par le dessus de la salade S et au-dessus du convoyeur 2, c'est-à-dire au-dessus du trou 22 où se trouve cette salade S et au-dessus de la bande 21.

Dans le mode réalisation représenté, chaque pince 321, 322, 323 comporte un ou plusieurs doigts, solidaires l'un à l'autre et écartés l'un de l'autre le long du pourtour P de la salade S afin d'avoir un plus grand nombre de points d'appui de chaque pince autour de la salade S. Dans l'exemple représenté aux figures, il est par exemple prévu deux doigts a et b pour chaque pince 321, 322, 323.

Le système 32 de serrage du pourtour P de la salade S permet de s'adapter à divers types et dimensions de salade S. Le système 32 de serrage est réglé pour exercer un effort de serrage prescrit autour de la salade S, afin de ne pas l'abîmer.

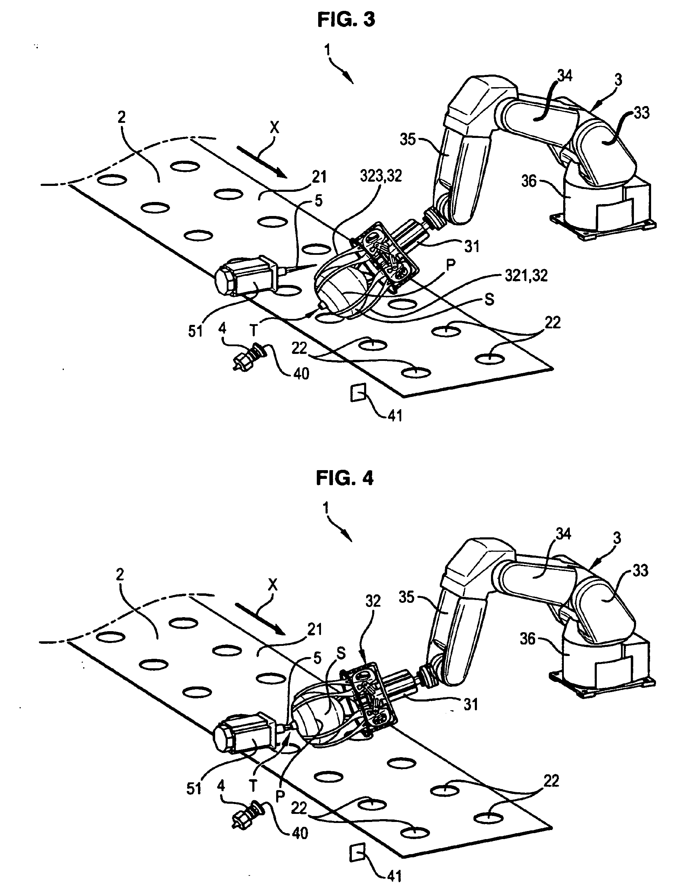

La salade S tenue dans la position de préhension du système 32 de serrage est ensuite soulevée du convoyeur 2 par le robot 3 pour être déplacée par celui-ci devant un système 4 de détection de la position du trognon T de la salade S par rapport au bras 31. Le bras 31 se trouve alors dans une deuxième position prescrite de coordonnées connues à la figure 3. Le système 4 de détection mesure des caractéristiques du trognon T de la salade S se trouvant dans cette deuxième position et par exemple le diamètre D apparent du trognon T et la position du centre C du trognon T. Le système 4 de détection est par exemple optique et comporte par exemple à cet effet une caméra 40 prenant au moins une image de la salade S dans la deuxième position de détection, des moyens de traitement d'image étant prévus pour déterminer les caractéristiques de la salade S à partir de cette ou de ces images. Le système 4 de détection peut également comporter un autre capteur 41, tel que par exemple un capteur laser 41, pour mesurer la cote Z du trognon T dans une direction X3 direction perpendiculaire à l'image de la caméra 40, afin de déterminer la distance entre le trognon T et le bras 31 et/ou la distance entre le trognon T et la caméra 40 de coordonnées connues.

La caméra 40 n'est pas exposée sous le convoyeur 2 et peut être placée sur une paroi verticale, ce qui évite de salir le système 4 de détection par des particules de salades.

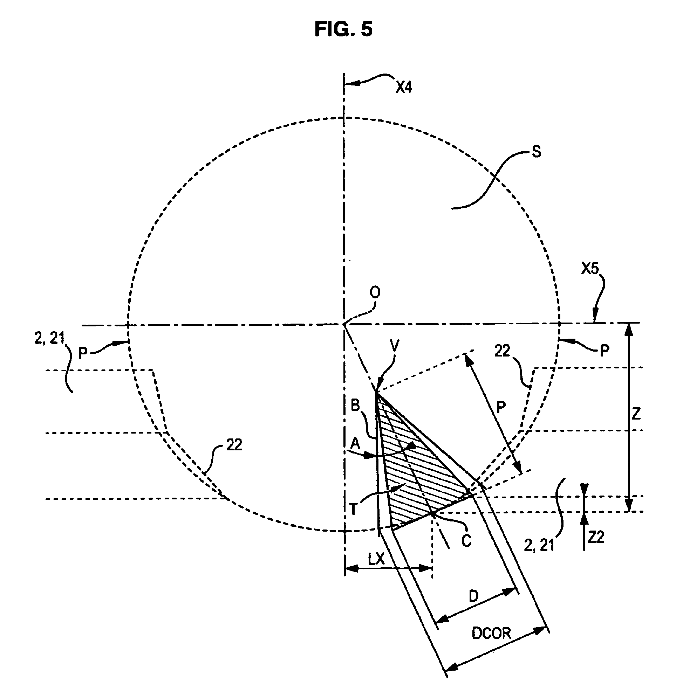

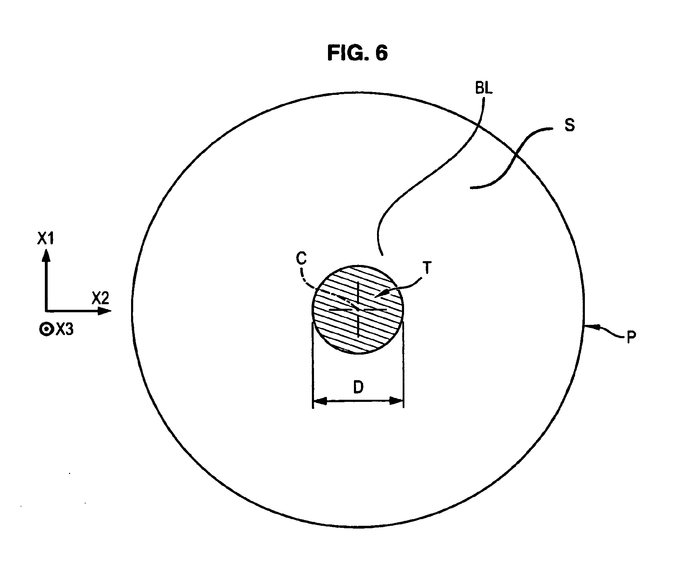

Puis, le robot 3 est commandé pour amener la salade S en une troisième position de découpe de son trognon T par un couteau 5, ainsi que cela est représenté à la figure 4. Le couteau 5 et/ou le bras 31 d'extrémité sur lequel se trouve le système 32 de serrage de la salade S dans la position de préhension sont actionnés par des moyens d'entraînement appropriés pour faire pénétrer le couteau 5 en des coordonnées calculées dans la salade S, ainsi que cela est décrit ci-dessous en référence aux figures 5 et 6.

La figure 6 représente de manière schématique une image de la salade S prise par le système 4 de détection dans la deuxième position. Le trognon T est détecté par le fait qu'il possède une couleur ou une intensité lumineuse (par exemple niveau de couleurs ou niveau de gris dans l'image) différente du reste de la salade et du pourtour P, ce trognon T se présentant sous la forme d'une tâche brune à peu près circulaire par rapport au reste de la salade de couleur blanche, verte ou rougeâtre, le trognon T étant entouré par une zone BL blanchâtre ou verdâtre de la salade. Le système 4 permet de déterminer les coordonnées du centre C du trognon T suivant deux axes sécants ou perpendiculaires X1 et X2 du plan de l'image, tandis que le capteur 41 permet de déterminer la troisième coordonnée Z du centre C du trognon T suivant un axe X3 traversant ce plan de l'image et par exemple perpendiculaire à X1 et X2.

A la figure 5, les coordonnées sont prises par rapport à un point O de référence de coordonnées connues du robot 3 et du bras 31 dans la troisième position de découpe de la figure 4. Les coordonnées en X1, X2, X3 du centre C du trognon T et le diamètre D du trognon T déterminées par le système 4 de détection permettent de calculer la position du trognon T par rapport au système 32 de serrage et par rapport au bras 31, à savoir le décalage LX et le décalage Z le long de deux axes perpendiculaires par rapport au point O de référence. La profondeur P du trognon T dans la salade S est une valeur constante fixée à l'avance pour chaque type de salade. Par exemple, pour une laitue, la profondeur P est de 60 mm environ. Par exemple, pour une scarole, une batavia et une frisée, la profondeur P est de 30 mm environ.

A partir des informations de repérage fournies par le système 4 de détection, un calculateur détermine le mouvement relatif que doivent adopter le couteau 5 et le système 32 de préhension du robot 3 pour découper le trognon T sur la salade S s'y trouvant à la figure 4.

Aux figures 5 et 6, le trognon T est représenté par la partie hachurée et a globalement une forme conique ayant pour base le cercle de centre C et de diamètre D, la profondeur P correspondant à la hauteur de ce cône au-dessus de ce cercle dans la salade S. En fonction de la profondeur P et des données acquises sur la position du trognon T, le calculateur calcule la trajectoire B que doit adopter le couteau 5 par rapport à la salade S. Cette trajectoire B est par exemple également en forme de cône égale à ou contenant le cône du trognon T.

Le calculateur détermine donc le demi-angle A au centre du cône de la trajectoire B de tranchage, pris par rapport à l'axe médian du trognon T, qui forme également l'axe du cône du trognon T passant par son centre C et par exemple également par le point O de référence, lorsque ce point O de référence correspond au centre de la salade S. On voit que le pourtour P par lequel la salade S est tenue dans le système 32 de serrage correspond à la surface périphérique et latérale de celle-ci.

Par conséquent, le diamètre DCOR du cône B de tranchage est supérieur ou égal au diamètre D.

A la figure 6, le point O de référence passe par un premier axe X4 de référence ayant des coordonnées connues, qui correspond à l'axe central du système 32 de serrage orienté du bras 31 vers la salade S et qui passe par exemple entre les pinces. Le point O de référence passe par exemple également par un autre axe X5 de coordonnées connues, perpendiculaire à l'axe X4. Les décalages LX et Z sont pris respectivement par rapport à cet axe X4 et cet axe X5 respectivement. A la figure 5, on a représenté en outre en traits interrompus la bande 21 du convoyeur 2 ayant le trou 22 et la position qu'occupait la salade S dans ce trou 22 lorsqu'elle se trouvait dans la première position de prélèvement de la figure 1, étant donné que dans la position de préhension de la salade S dans le système 32 de serrage la salade S reste maintenue et sensiblement immobile par rapport à ce système 32 de serrage. Le calculateur permet de déterminer le point V de visée du couteau 5, qui correspond au sommet du cône de trognon T et du cône de la trajectoire B de tranchage.

Dans le mode de réalisation représenté à la figure 4 dans la troisième position de découpe, le couteau 5 est monté sur un moteur 51 d'entraînement du couteau 5 en rotation sur lui-même, par exemple sur un axe de rotation horizontal. Le robot 3 plante la salade S tenue dans le système 32 de serrage sur le couteau 5 se trouvant à l'arrêt, pour insérer le couteau 5 dans la salade S, de telle manière que le bord de tranchage du couteau 5 se trouve sur une génératrice du cône de la trajectoire B de tranchage ayant été calculée. Puis le couteau 5 est entraîné en rotation par le moteur 5 pendant que le robot 3 met en mouvement par son bras 31 le système 32 de serrage pour orienter la salade pour que le bord de tranchage du couteau 5 décrive dans la salade S la trajectoire B de tranchage en l'occurrence conique, ayant été calculée.

Le trognon T ayant été découpé dans la salade S se détache alors de celle-ci, par exemple par gravité. Le robot 3 déplace ensuite le reste de la salade S dont le trognon T a été ôté éventuellement vers un autre poste de découpe des feuilles de salade et/ou déverse le reste de la salade S à un poste de récupération de la salade S dont le trognon T a été ôté; le reste de cette salade étant destiné à la consommation.

Bien entendu, le couteau 5 pourrait être fixe et c'est le robot 3 seul qui permettrait de décrire la trajectoire B de tranchage dans un autre mode de réalisation.

Dans encore un autre mode de réalisation, le robot 3 reste fixe dans la troisième position de découpe et c'est le couteau 5 qui est animé d'un mouvement par des moyens d'entraînement pour décrire la trajectoire B de tranchage.

Grâce au système de serrage du pourtour P de la salade S, la salade est bien maintenue pendant sa découpe par le couteau 5, sans risquer de bouger du fait de la pénétration du couteau 5 dedans, tout en permettant d'avoir une détection du dessous de la salade qui permet d'obtenir des coordonnées précises, fiables et complètes du trognon T, contrairement aux dispositifs connus où la salade n'est tenue que par son trognon. En outre le système de préhension suivant l'invention permet de retenir la salade dont le trognon vient d'être enlevé, pour éviter que les feuilles de salade tombent en vrac et engendrent des salissures sur le matériel environnant. Il permet également de présenter la salade devant la lame fixe pour la couper en deux.

## Revendications

1. Dispositif de découpe du trognon de salades,
**caractérisé en ce qu'**il comporte au moins un convoyeur (2) d'amenée en continu des salades (S) avec leur trognon (T) tourné vers le bas,
au moins un robot (3) comportant au moins un bras mobile (31) muni d'un système (32) de serrage pour, dans une position de préhension de la salade (S), saisir la salade (S) par son pourtour (P) à distance du trognon (T) en laissant libre son trognon (T),
au moins un couteau (5) pour la découpe du trognon (T),
des moyens de commande automatisés étant prévus pour faire passer, lorsque le système (32) de serrage se trouve dans la position de préhension de la salade (S), le bras (31) du robot successivement par :
- une première position de prélèvement de la salade (S) du convoyeur (2),
- une deuxième position, dans laquelle le trognon (T) se trouve devant un système (4) de détection, pour déterminer la position du trognon (T) par rapport au bras (31),
- une troisième position de découpe, dans laquelle des moyens d'entrainement du couteau (5) et du bras (31) l'un par rapport à l'autre provoquent la découpe du trognon (T) par le couteau (5) pour séparer le trognon (T) par rapport au pourtour (P) de la salade (S) en fonction au moins de la position du trognon (T) ayant été déterminée.

2. Dispositif suivant la revendication 1, **caractérisé en ce que** le système (32) de serrage est à pinces (321, 322, 323) sur le pourtour (P) de la salade (S).

3. Dispositif suivant l'une quelconque des revendications précédentes, **caractérisé en ce que** le convoyeur (2) d'amenée comporte au moins un trou (22) de réception d'une salade (S) disposée sur le convoyeur (2) avec son trognon (T) en bas.

4. Dispositif suivant l'une quelconque des revendications précédentes, **caractérisé en ce que** le convoyeur (2) d'amenée comporte au moins une bande (21) sans fin d'entraînement en translation des salades (S) logées chacune dans un trou (22) de réception ménagé dans la bande (21) avec le trognon (T) de la salade (S) situé en bas.

5. Dispositif suivant l'une quelconque des revendications précédentes, **caractérisé en ce que** le système (32) de serrage est à pinces (321, 322, 323) pour exercer une force de serrage centripète sur plusieurs points d'appui se trouvant sur le pourtour (P) de la salade (S).

6. Dispositif suivant l'une quelconque des revendications précédentes, **caractérisé en ce que** le système (32) de serrage est à pinces (321, 322, 323) comportant une position d'ouverture, dans laquelle les pinces (321, 322, 323) sont écartées au-dessus de la salade (S) et ladite position de préhension, dans laquelle les pinces (321, 322, 323) sont rapprochées du pourtour (P) de la salade (S) pour serrer ce pourtour (P) sans serrer le trognon (T).

7. Dispositif suivant l'une quelconque des revendications précédentes, **caractérisé en ce que** le système (4) de détection comporte une caméra (40) pour obtenir au moins une image du trognon (T) de la salade (S) se trouvant dans le système (32) de serrage dans la deuxième position et des moyens pour déterminer les coordonnées du trognon (T) suivant deux axes (X1, X2) sécants situés dans le plan de cette image, et un capteur (41) pour déterminer une troisième coordonnée (X3) du trognon (T) suivant un axe (X3) de coordonnées traversant le plan de l'image.

8. Dispositif suivant la revendication 7, **caractérisé en ce que** des moyens de traitement de la au moins une image fournie par la caméra (40) sont prévus pour calculer le diamètre (D) apparent du trognon (T) dans la deuxième position.

9. Dispositif suivant la revendication 8, **caractérisé en ce que** le couteau (5) et le bras (31) du robot (3) sont commandés par les moyens de commande suivant une trajectoire (B) de tranchage du trognon (T) ayant été calculée en fonction de la position ayant été déterminée du trognon (T), de son diamètre (D) ayant été calculé et d'une profondeur (P) prescrite du trognon (T) dans la salade (S).

10. Dispositif suivant la revendication 9, **caractérisé en ce que** la trajectoire (B) de tranchage délimite dans la salade (S) un volume égal à ou contenant le volume du trognon (T) ayant été calculé.

11. Dispositif suivant l'une quelconque des revendications précédentes, **caractérisé en ce qu'**un moteur (51) est prévu pour entraîner en rotation le couteau (5) dans la troisième position de découpe.

12. Dispositif suivant l'une quelconque des revendications précédentes, **caractérisé en ce que** les moyens d'entraînement du bras (31) et du couteau (5) dans la troisième position de découpe du trognon (T) sont prévus pour faire tourner le couteau (5) sur lui-même et pour faire exécuter au système (32) de serrage un mouvement conjugué pour décrire une trajectoire (B) de tranchage du couteau (5) dans la salade, ayant été calculée en fonction au moins de la position du trognon (T) ayant été déterminée.

13. Dispositif suivant l'une quelconque des revendications précédentes, **caractérisé en ce que** le système (4) de détection se trouve à l'écart de la verticale par rapport au couteau (5) et à une hauteur plus grande que celle du convoyeur (2).

14. Procédé de découpe du trognon de salades (S) à l'aide du dispositif de découpe suivant l'une quelconque des revendications précédentes, dans lequel :
- on amène par le convoyeur (2) en continu des salades (S) avec leur trognon (T) tourné vers le bas en un poste de découpe où se trouve le robot (3),
- on prélève par le système (32) de serrage du robot (3) une salade (S) sur le convoyeur (2) par le fait que le système (32) de serrage saisit le pourtour (P) de la salade (S) à distance de son trognon (T) dans la position de préhension,
- le robot (3) ayant son système (32) de serrage dans la position de préhension du pourtour (P) de la salade (S) amène le trognon (T) de cette salade (S) devant le système (4) de détection pour déterminer la position du trognon (T) par rapport au bras (31) du robot (3) dans la deuxième position,
- le robot (3) ayant son système (32) de serrage dans la position de préhension du pourtour (P) de la salade (S) amène cette salade (S) contre le couteau (5) pour découper le trognon (T).

## Claims

1. Device for cutting off lettuce stumps,
**characterized in that** it comprises at least one conveyor (2) for continuously delivering heads of lettuce (S) with their stumps (T) turned downward,
at least one robot (3) comprising at least one movable arm (31) equipped with a gripping system (32) for, in one lettuce (S) gripping position, gripping the lettuce head (S) by its periphery (P) remote from the stump (T), leaving its stump (T) free,
at least one knife (5) for cutting out the stump (T),
automated control means being provided for causing the robot arm (31), when the gripping system (32) is in the lettuce head (S) gripping position, to assume sequentially:
- a first position for taking the lettuce (S) from the conveyor (2),
- a second position, wherein the stump (T) is positioned in front of a detection system (4) for determining the position of the stump (T) relative to the arm (31),
- a third, cutting position, wherein means for driving the knife (5) and arm (31) relative to one another bring about the cutting of the stump (T) by the knife (5) so as to separate the stump (T) from the periphery (P) of the lettuce head (S) depending at least on the position of the stump (T) having been determined.

2. The device according to Claim 1, **characterized in that** the gripping system (32) uses jaws (321, 322, 323) on the periphery (P) of the lettuce head (S) .

3. The device according to any one of the foregoing claims, **characterized in that** the delivery conveyor (2) comprises at least one hole (22) for accommodating a lettuce head (S) positioned on the conveyor (2) with its stump (T) downward.

4. The device according to any one of the foregoing claims, **characterized in that** the delivery conveyor (2) comprises at least one endless belt (21) for driving in translation lettuce heads (S) each accommodated in an accommodating hole (22) provided in the belt (21) with the stump (T) of the lettuce head (S) downward.

5. The device according to any one of the foregoing claims, **characterized in that** the gripping system (32) uses jaws (321, 322, 323) to exert a centripetal gripping force at several support points located on the periphery (P) of the lettuce head (S).

6. The device according to any one of the foregoing claims, **characterized in that** the gripping system (32) uses jaws (321, 322, 323) comprising an open position, wherein the jaws (321, 322, 323) are open above the lettuce head (S) and said gripping position, wherein the jaws (321, 322, 323) approach the periphery (P) of the lettuce head (S) so as to grip said periphery (P) without gripping the stump (T).

7. The device according to any one of the foregoing claims, **characterized in that** the detection system (4) comprises a camera (40) for obtaining at least one image of the stump (T) of the lettuce head (S) located in the gripping system (32) in the second position and means for determining the coordinates of the stump (T) along two intersecting axes (X1, X2) located in the plane of said image, and a sensor (41) for determining a third coordinate (X3) of the stump (T) along a coordinate axis (X3) running through the plane of the image.

8. The device according to Claim 7, **characterized in that** means for processing the at least one image supplied by the camera (40) are provided for calculating the apparent diameter (D) of the stump (T) in the second position.

9. The device according to Claim 8, **characterized in that** the knife (5) and the arm (31) off the robot (3) are controlled by the control means along a path (B) for cutting the stump (T) calculated according to the position determined for the stump (T), its calculated diameter (D) and a prescribed depth (P) of the stump (T) within the lettuce head (S).

10. The device according to Claim 9, **characterized in that** the cutting path (B) defines within the lettuce head (S) a volume equal to or containing the calculated volume of the stump (T).

11. The device according to any one of the foregoing claims, **characterized in that** a motor (51) is provided for driving the knife (5) in rotation in the third, cutting position.

12. The device according to any one of the foregoing claims, **characterized in that** the means for driving the arm (31) and the knife (5) in the third stump (T) cutting position are designed to rotate the knife (5) on its own axis and to cause the gripping system (32) to execute a conjugated motion for following a cutting path (B) of the knife (5) in the lettuce head, calculated depending at least on the determined position of the stump (T).

13. The device according to any one of the foregoing claims, **characterized in that** the detection system (4) is located away from the vertical relative to the knife (5) and at a greater height than that of the conveyor (2).

14. Method for cutting off the stump of heads of lettuce (S) using a cutting device according to any one of the foregoing claims, wherein:
- lettuce heads (S) are delivered continuously by the conveyor (2) with their stump (T) turned downward to a cutting station where the robot (3) is located,
- the gripping system (32) of the robot (3) takes a lettuce head (S) from the conveyor (2) by the gripping system (32) seizing the periphery (P) of said lettuce head (S) remote from its stump (T) in the gripping position,
- the robot (3) having its gripping system (32) in the position for gripping the periphery (P) of the lettuce head (S) brings the stump (T) of said lettuce head (S) in front of the detection system (4) to determine the position of the stump (T) compared with the arm (31) of the robot (3) in the second position,
- the robot (3) having its gripping system (32) in the position for gripping the periphery (P) of the lettuce head (S) brings said lettuce head (S) into contact with the knife (5) for cutting out the stump (T).

## Patentansprüche

1. Vorrichtung zum Abschneiden von Salatstrünken,
**dadurch gekennzeichnet, dass** sie Folgendes umfasst:
mindestens ein Förderelement (2) für das kontinuierliche Zuführen von Salaten (S), deren Strunk (T) nach unten gekehrt ist,
mindestens einen Roboter (3), der mindestens einen beweglichen Arm (31) aufweist, der mit einem Einspannsystem (3) versehen ist, um, in einer Position zum Ergreifen des Salats (S), den Salat (S) über seinen Außenumfang (P) im Abstand zu dem Strunk (T) zu greifen, indem sein Strunk (T) frei gelassen wird,
mindestens ein Messer (5) zum Abschneiden des Strunks (T),
wobei automatisierte Betätigungsmittel vorgesehen sind, um, wenn sich das Einspannsystem (32) in der Position zum Ergreifen des Salats (S) befindet, den Arm (31) des Roboters nacheinander folgende Positionen durchlaufen zu lassen:
- eine erste Position für die Entnahme des Salats (S) aus dem Förderelement (2),
- eine zweite Position, in der sich der Strunk (T) vor einem Detektionssystem (4) befindet, um die Position des Strunks (T) relativ zu dem Arm (31) zu bestimmen,
- eine dritte Position zum Abschneiden, in der Mittel für den Antrieb des Messers (5) und des Arms (31) relativ zueinander das Abschneiden des Strunks (T) durch das Messer (5) bewirken, um den Strunk (T) relativ zu dem Außenumfang (P) des Salats (S) in Abhängigkeit von mindestens der Position des Strunks (T), die bestimmt wurde, zu trennen.

2. Vorrichtung nach Anspruch 1, **dadurch gekennzeichnet, dass** das Einspannsystem (32) ein System zum Einspannen mit Klauen (321, 322, 323) an dem Außenumfang (P) des Salats (S) ist.

3. Vorrichtung nach einem der vorhergehenden Ansprüche, **dadurch gekennzeichnet, dass** das Zuführ-Förderelement (2) mindestens eine Öffnung (22) für die Aufnahme eines Salats (S) aufweist, der an dem Förderelement (2) mit seinem Strunk (T) nach unten angeordnet ist. '

4. Vorrichtung nach einem der vorhergehenden Ansprüche, **dadurch gekennzeichnet, dass** das Zuführ-Förderelement (2) mindestens ein Endlosband (21) zur Verschiebung der Salate (S) aufweist, die jeweils in einer Aufnahmeöffnung (22), die in dem Band (21) ausgebildet ist, mit dem Strunk (T) des Salats (S) nach unten angeordnet sind.

5. Vorrichtung nach einem der vorhergehenden Ansprüche, **dadurch gekennzeichnet, dass** das Einspannsystem (32) ein System zum Einspannen mit Klauen (321, 322, 323) ist, um eine zentripetale Einspannkraft auf mehrere Abstützpunkte auszuüben, die sich an dem Außenumfang (P) des Salats (S) befinden.

6. Vorrichtung nach einem der vorhergehenden Ansprüche, **dadurch gekennzeichnet, dass** das Einspannsystem (32) Klauen (321, 322, 323) aufweist, die eine Öffnungsposition, in der die Klauen (321, 322, 323) oberhalb des Salats (S) aufgespreizt sind, und die Greifposition aufweisen, in der die Klauen (321, 322, 323) an den Außenumfang (P) des Salats (S) herangeführt sind, um diesen Außenumfang (P) einzuspannen, ohne den Strunk (T) einzuspannen.

7. Vorrichtung nach einem der vorhergehenden Ansprüche, **dadurch gekennzeichnet, dass** das Detektionssystem (4) Folgendes umfasst: eine Kamera (40), um mindestens ein Bild des Strunks (T) des Salats (S), der sich in dem Einspannsystem (32) in der zweiten Position befindet, zu erhalten, und Mittel zum Bestimmen der Koordinaten des Strunks (T) in zwei sich schneidenden Achsen (X1, X2), die sich in der Ebene dieses Bildes befinden, und einen Sensor (41), um eine dritte Koordinate (X3) des Strunks (T) in einer Koordinatenachse (X3), welche durch die Ebene des Bildes verläuft, zu bestimmen.

8. Vorrichtung nach Anspruch 7, **dadurch gekennzeichnet, dass** Mittel für die Verarbeitung des mindestens einen Bildes, das von der Kamera (40) bereitgestellt wird, vorgesehen sind, um den lichten Durchmesser (D) des Strunks (T) in der zweiten Position zu berechnen.

9. Vorrichtung nach Anspruch 8, **dadurch gekennzeichnet, dass** das Messer (5) und der Arm (31) des Roboters (3) durch die Betätigungsmittel entlang einer Bewegungsbahn (B) zum Abschneiden des Strunks (T) betätigt werden, die in Abhängigkeit von der Position des Strunks (T), die bestimmt wurde, seines Durchmessers (D), der errechnet wurde, und einer vorgeschriebenen Tiefe (P) des Strunks (T) in dem Salat (S) berechnet wird.

10. Vorrichtung nach Anspruch 9, **dadurch gekennzeichnet, dass** die Bewegungsbahn (B) zum Abschneiden in dem Salat (S) ein Volumen begrenzt, das dem Volumen des Strunks (T), das berechnet wurde, gleich ist oder es umfasst.

11. Vorrichtung nach einem der vorhergehenden Ansprüche, **dadurch gekennzeichnet, dass** ein Antrieb (51) vorgesehen ist, um das Messer (5) zur Drehung in der dritten Position zum Abschneiden anzutreiben.

12. Vorrichtung nach einem der vorhergehenden Ansprüche, **dadurch gekennzeichnet, dass** die Mittel für den Antrieb des Arms (31) und des Messers (5) in der dritten Position zum Abschneiden des Strunks (T) vorgesehen sind, um das Messer (5) um sich selbst zu drehen und um das Einspannsystem (32) eine gekoppelte Bewegung ausführen zu lassen, um eine Bewegungsbahn (B) zum Abschneiden des Messers (5) in dem Salat zu beschreiben, die in Abhängigkeit von mindestens der Position des Strunks (T), die bestimmt wurde, berechnet wurde.

13. Vorrichtung nach einem der vorhergehenden Ansprüche, **dadurch gekennzeichnet, dass** sich das Detektionssystem (4) relativ zu dem Messer (5) von der Vertikalen beabstandet und in einer Höhe befindet, die größer als die des Förderelements (2) ist.

14. Verfahren zum Abschneiden des Strunks von Salaten (S) mit Hilfe der Abschneidevorrichtung nach einem der vorhergehenden Ansprüche, wobei
- durch das Förderelement (2) kontinuierlich Salate (S), deren Strunk (T) nach unten gekehrt ist, in eine Abschneidestation, in der sich der Roboter (3) befindet, geführt werden,
- durch das Einspannsystem (32) des Roboters (3) ein Salat (S) in dem Förderelement (2) dadurch entnommen wird, dass das Einspannsystem (32) den Außenumfang (P) des Salats (S) im Abstand zu seinem Strunk (T) in der Greifposition ergreift,
- der Roboter (3), dessen Einspannsystem (32) sich in der Position zum Ergreifen des Außenumfangs (P) des Salats (S) befindet, den Strunk (T) dieses Salats (S) vor das Detektionssystem (4) führt, um die Position des Strunks (T) relativ zu dem Arm (31) des Roboters (3) in der zweiten Position zu bestimmen,
- der Roboter (3), dessen Einspannsystem (32) sich in der Position zum Ergreifen des Außenumfangs (P) des Salats (S) befindet, diesen Salat (S) gegen das Messer (5) führt, um den Strunk (T) abzuschneiden.
